# EUROPEAN PATENT APPLICATION

(11) **EP 4 671 209 A1**
(43) Date of publication of application: **31.12.2025**
(21) Application number: 24760052.1
(22) Date of filing: 29.01.2024
(51) Int. Cl.: C01G 41/00

(54) **METHOD FOR PRODUCING ZIRCONIUM TUNGSTATE**

(30) Priority: 20.02.2023 JP 2023024492
(71) Applicant: JX Advanced Metals Corporation, Tokyo 105-8417 (JP)
(72) Inventor: TSUCHIDA, Katsuyuki, Kitaibaraki-shi, Ibaraki 319-1535 (JP); LEE, Mihee, Kitaibaraki-shi, Ibaraki 319-1535 (JP); KOMINAMI, Hiroshi, Higashiosaka-shi, Osaka 577-8502 (JP); ISHITSUBO, Yuya, Higashiosaka-shi, Osaka 577-8502 (JP); YATO, Ryuichi, Higashiosaka-shi, Osaka 577-8502 (JP)
(74) Representative: Mewburn Ellis LLP
(86) International application number: PCT/JP2024/002701
(87) International publication number: WO 2024/176745

(57) **Abstract**

A method for producing zirconium tungstate includes a reaction step of causing a raw material containing zirconium and tungsten to react by heating it under an action of pressure in a pressure-resistant vessel to obtain a precursor; and a heat treatment step of heating the precursor to obtain a product comprising ZrW₂O₈, wherein, in the reaction step, the raw material is caused to react in a presence of sulfate ions in the pressure-resistant vessel.

## Description

### [Technical Field]

This specification discloses a method for producing zirconium tungstate.

### [Background Art]

While normal materials expand when they are heated, zirconium tungstate (ZrW₂O₈) is one material that exhibits negative thermal expansion, that is, it contracts when the temperature increases. Such negative thermal expansion materials are expected, for example, to be mixed with positive thermal expansion materials such as resins as fillers to form composite materials with suppressed thermal expansion, which can then be used as encapsulating materials for semiconductor chips mounted in electronic components.

Some applications require zirconium tungstate in fine powder form such as, for example, submicron order. Methods for producing such fine zirconium tungstate include the hydrothermal method.

For example, Patent Literature 1 describes "a method of synthesizing a precursor by a hydrothermal synthesis method in which a mixed solution consisting of an aqueous solution of a tungstate salt, an aqueous solution of a zirconium compound having a Zr=O structure, and concentrated hydrochloric acid is heated, and then heating the precursor at a temperature of about 600°C", and it is focused on the following problems: "the hydrothermal synthesis method has an advantage of being able to synthesize small particles of 1 micrometer or less, but since the synthesis of the precursor requires synthesis conditions of 130°C or higher in an acidic hydrochloric acid solution, a pressure-resistant autoclave with an acid-resistant fluoropolymer inner cylinder is used. Also, the reaction must be carried out for a long period of time (e.g., 6 hours or more if the reaction temperature is 150°C) to achieve a precursor yield of 50% or more. This makes mass production difficult and increases the production costs". In order to solve this problem, Patent Literature 1 proposes "a method for producing ZrW₂O₈ particles, comprising the steps of: heating a mixed solution containing an aqueous tungstate solution, an aqueous solution of a zirconium compound having a Zr=O structure, and concentrated hydrochloric acid in a reaction vessel while providing a temperature difference between the liquid phase and the gas phase in the reaction vessel to produce ZrW₂O₈ precursor particles; and then heating the ZrW₂O₈ precursor particles to produce ZrW₂O₈ particles".

### [Citation List]

### [Patent Literature]

[PTL 1]
Japanese Patent Application Publication No. 2016-179915 A

### [Summary of Invention]

### [Technical Problem]

In the synthesis such as the hydrothermal method, the hydrochloric acid system is often used, as described in Patent Literature 1. However, when the hydrochloric acid system is used, needle-shaped crystals grow when a precursor such as ZrW₂O₇(OH)₂(H₂O)₂ is synthesized from a raw material containing zirconium and tungsten, and the resulting precursor is thus needle-shaped. When zirconium tungstate is produced by heating such a needle-shaped precursor, zirconium tungstate also tends to become needle-shaped. With needle-shaped zirconium tungstate, there is concern that viscosity will increase and flowability (thixotropy) will deteriorate when it is mixed as a filler with a resin or the like.

This specification provides a method for producing zirconium tungstate that can suppress needle-shaped products and obtain granular products.

### [Solution to Problem]

The method for producing zirconium tungstate disclosed in this specification comprises a reaction step of causing a raw material containing zirconium and tungsten to react by heating it under an action of pressure in a pressure-resistant vessel to obtain a precursor; and a heat treatment step of heating the precursor to obtain a product comprising ZrW₂O₈, wherein, in the reaction step, the raw material is caused to react in a presence of sulfate ions in the pressure-resistant vessel.

### [Advantageous Effects of Invention]

According to the above method for producing zirconium tungstate, needle-shaped products can be suppressed and granular products can be obtained.

### [Brief Description of Drawings]

[FIG. 1]

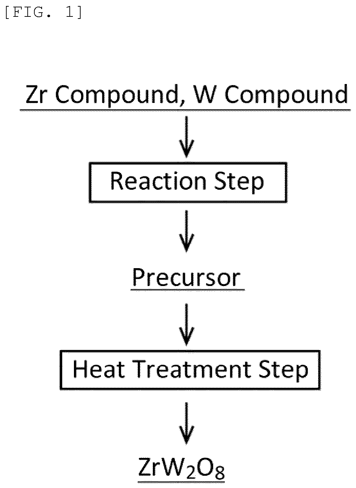

   FIG. 1 is a flow diagram illustrating an example of a method for producing zirconium tungstate according to an embodiment, in which a solvothermal method is used in a reaction step.
[FIG. 2]

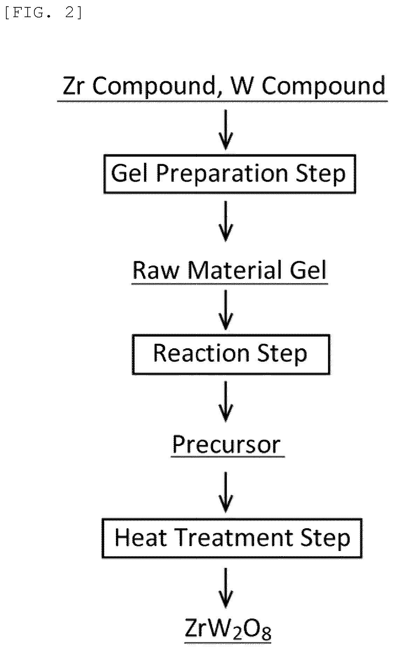

   FIG. 2 is a flow diagram illustrating an example of a method for producing zirconium tungstate according to another embodiment, in which a hydrothermal method or a dry gel conversion (DGC) method is used in a reaction step.
[FIG. 3]

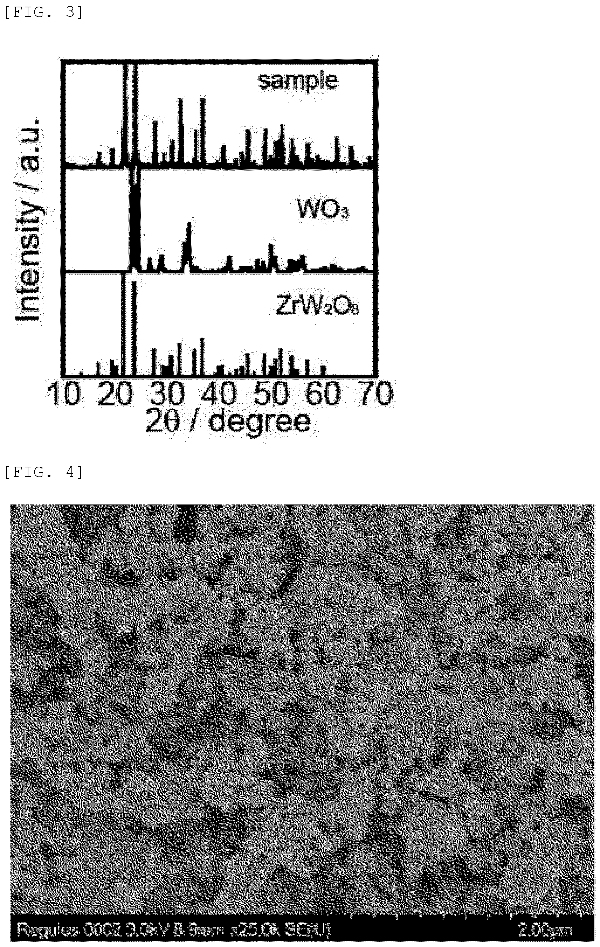

   FIG. 3 is an X-ray diffraction profile of a product obtained in Example 1.
[FIG. 4]
   FIG. 4 is a SEM image of a product obtained in Example 1.
[FIG. 5]

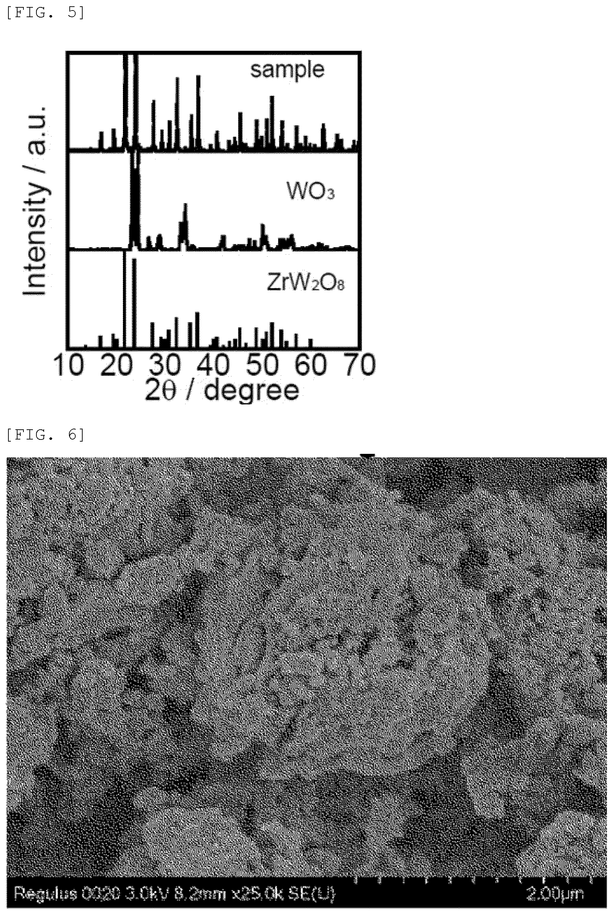

   FIG. 5 is an X-ray diffraction profile of a product obtained in Example 2.
[FIG. 6]
   FIG. 6 is a SEM image of a product obtained in Example 2.
[FIG. 7]

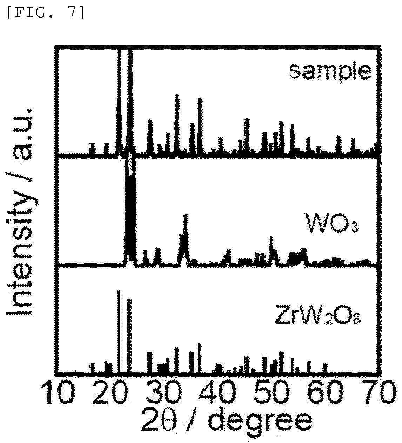

   FIG. 7 is an X-ray diffraction profile of a product obtained in Example 3.
[FIG. 8]

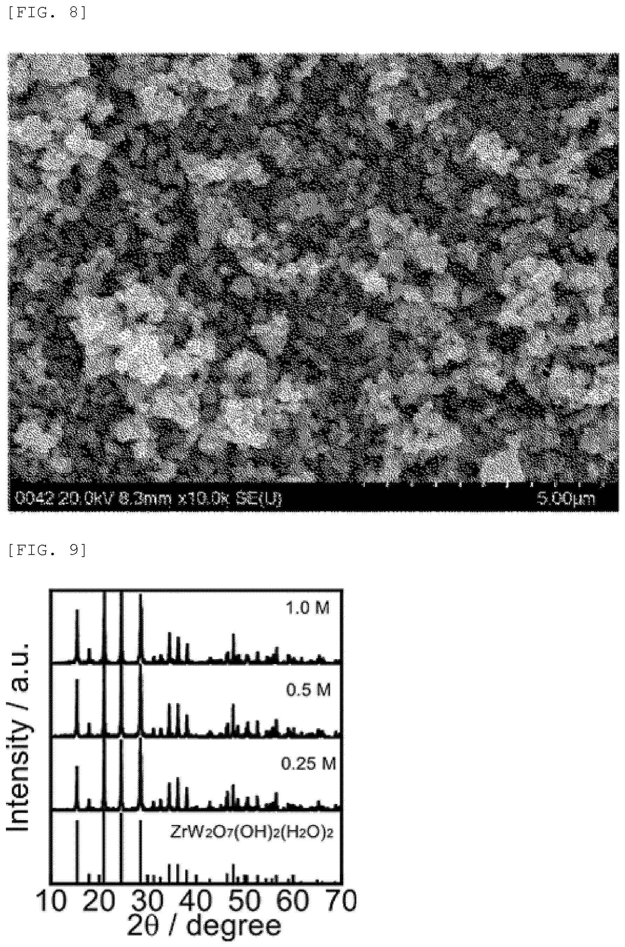

   FIG. 8 is a SEM image of a product obtained in Example 3.
[FIG. 9]
   FIG. 9 is an X-ray diffraction profile of each product obtained in Example 4.
[FIG. 10]

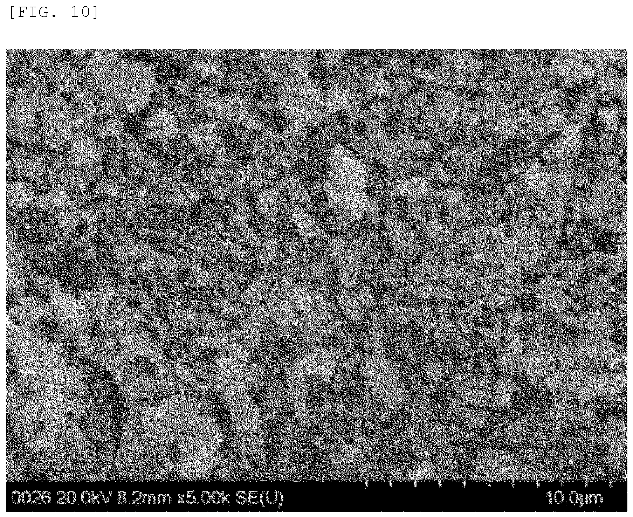

   FIG. 10 is an SEM image of a product obtained under a condition of a sulfuric acid concentration of 1.0 M in Example 4.
[FIG. 11]

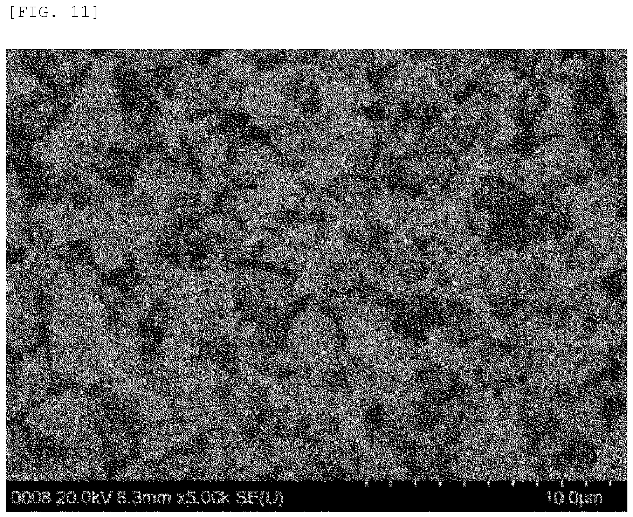

   FIG. 11 is an SEM image of a product obtained under a condition of sulfuric acid concentration of 0.5 M in Example 4.
[FIG. 12]

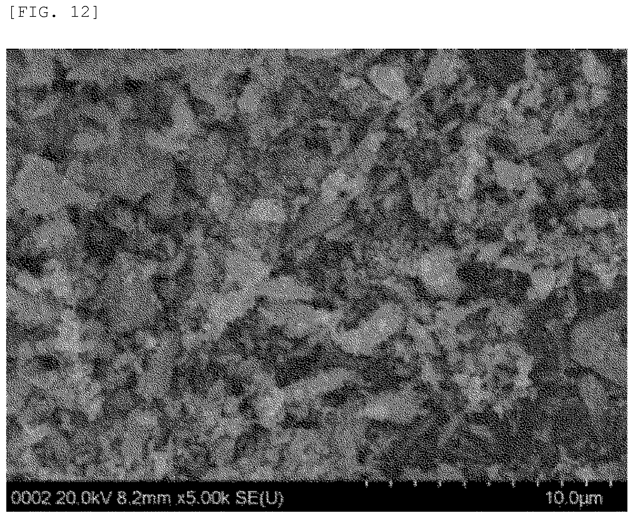

   FIG. 12 is an SEM image of a product obtained under a condition of a sulfuric acid concentration of 0.25 M in Example 4.

### [Description of Embodiments]

Embodiments of the method for producing zirconium tungstate described above will be described below in detail.

A method for producing zirconium tungstate according to an embodiment includes a reaction step of synthesizing a precursor (such as ZrW₂O₇(OH)₂(H₂O)₂) from a raw material containing zirconium and tungsten, and a heat treatment step of heating the precursor to obtain a product containing ZrW₂O₈.

In the reaction step, for example, a solvothermal method, a hydrothermal method, a dry gel conversion (DGC) method, or the like can be used. In such a synthesis method, the above raw material is caused to react by heating it under an action of pressure in a pressure-resistant vessel (autoclave). In the solvothermal or hydrothermal method, the raw material is stirred in a liquid phase of an organic solvent or water as a solvent during pressurization and heating. In the case of the DGC method, the raw material is pressurized and heated in a gas phase containing solvent vapor.

Even if any of the solvothermal method, the hydrothermal method or the DGC method is employed, in this embodiment, sulfate ions are present in the reaction step in the pressure-resistant vessel, and the raw material is caused to react in the presence of the sulfate ions. This suppresses the formation of needle-shaped precursors and allows granular precursors to be obtained. The reason why the sulfate ions cause the precursor to form granular crystals would be because the sulfate ions in the pressure-resistant vessel do not inhibit nucleation but do act to inhibit crystal growth. In many cases, when crystallization occurs as a hydroxide after nucleation, the crystals grow in a vertical direction due to the characteristics of the crystal structure (tetragonal), whereas, in this embodiment, the sulfate ions would act as an inhibitor of that growth. However, this is not limited to the theory described above. It has been shown in "Hydrothermal synthesis of ZrW₂O₈ nanorods" (X. Xing et al., January 2006, Physica B 371, p. 81-84) that the use of hydrochloric acid or chloride in the hydrothermal method produces needle-shaped or rod-shaped products.

### (Raw Material)

A zirconium compound and a tungsten compound can be used for the raw material. An example of the zirconium compound includes zirconium sulfate (Zr(SO₄)₂). Examples of the tungsten compound includes sodium tungstate (Na₂WO₄), ammonium paratungstate ((NH₄)₁₀W₁₂O₄₁), and the like. Such compounds may be hydrates.

The zirconium compound and/or the tungsten compound as raw materials preferably contain sulfuric acid, such as sulfate salts. This facilitates heating and pressurizing of the raw material in the reaction step in the presence of sulfate ions. From this point of view, it is suitable for the raw material to contain zirconium sulfate or a hydrate thereof as a zirconium compound. However, it is not essential that the raw material contains sulfuric acid as long as the sulfate ions can be present in the pressure-resistant vessel in the reaction step, and alternatively or additionally, sulfuric acid can be added to the pressure-resistant vessel and/or the raw material gel can be impregnated with sulfuric acid, as described below.

Regarding a ratio of the zirconium compound and the tungsten compound in the raw material, a ratio of an atomic percentage (atm%) of tungsten in the tungsten compound to an atomic percentage (atm%) of zirconium in the zirconium compound (W/Zr) can be 1.0 to 3.0.

In the solvothermal method, as illustrated in FIG. 1, the raw material containing the zirconium compound and the tungsten compound can be fed into the pressure-resistant vessel and then subjected to the reaction step. This would be because, in the solvothermal method, the zirconium compound and the tungsten compound fed into the pressure-resistant vessel are uniformly mixed in the solvent, such as by dissolving them in the solvent under the high temperature and high pressure of the reaction step, and the synthesis reaction takes place in that state. On the other hand, in the DGC method and the hydrothermal method, as illustrated in FIG. 2, a gel preparation step described below is performed for the zirconium compound and the tungsten compound, and the resulting raw material gel can be used as the raw material in the reaction step. In the DGC method and the hydrothermal method, for example, when a zirconium sulfate solution zirconium compound and a sodium tungstate solution as the tungsten compound as the raw material are mixed together, they are immediately precipitated or coprecipitated to form a gel. After such a gel preparation step, the raw material gel obtained therein can be used for the reaction step. In any of the method or step, the formation of needle-shaped crystals can be suppressed by reacting in the presence of sulfate ions.

### (Gel Preparation Step)

In the case of the hydrothermal method or DGC method, the raw material containing the zirconium compound and the tungsten compound are mixed in a liquid such as water to prepare a raw material gel in the gel preparation step.

Specifically, for example, the zirconium compound such as zirconium sulfate may be added to pure water to prepare a zirconium sulfate solution or the like, and the tungsten compound such as tungstate salts may be added to pure water to prepare a tungstate solution or the like, and then mixed together and stirred. The stirring speed at this time does not matter as long as both of the aqueous solutions are uniformly mixed. The liquid temperature can be room temperature or ordinary temperature, as long as it is not extremely high or low enough to change the pH. Conditions may be modified as needed.

This can produce a gel-like coprecipitate. Subsequently, filtration or other solid-liquid separation such as suction filtration or reduced-pressure filtration is performed, washed with pure water if necessary, and then dried under a vacuum atmosphere, for example, to obtain a raw material gel. The raw material gel can contain the zirconium compound such as zirconium sulfate and the tungsten compound such as tungstate salts in a dispersed state, respectively.

### (Reaction Step)

In the reaction step, a precursor is synthesized from the zirconium compound and the tungsten compound in the raw material or the raw material gel by the solvothermal method, hydrothermal method, or DGC method.

The solvothermal method, hydrothermal method, and DGC method result in dissolution and deposition of the raw material in the liquid phase containing the solvent or the gas phase, and have advantages over solid phase reactions, such as stable and easy synthesis, and high crystallinity and composition uniformity of the reaction product.

In the solvothermal method, the raw material containing the zirconium compound and the tungsten compound is introduced into a pressure-resistant vessel together with an organic solvent, and heated to react under the action of pressure (for example, self-generated pressure or higher pressure as described below) with stirring in the liquid phase of the organic solvent. The organic solvent can contain a diol such as 1,4-butanediol. In particular, when an organic solvent containing 1,4-butanediol is used, the dehydration of 1,4-butanediol by sulfuric acid is presumed to yield tetrahydrofuran (THF) and water under high temperature and pressure. In this case, the dehydration reaction of 1,4-butanediol under high temperature and pressure and the dissolution of the raw material in the organic solvent occur simultaneously or sequentially, which would accelerate the reaction. Therefore, the organic solvent preferably contains 1,4-butanediol. For example, if a stirrer such as a magnetic stirrer is used to stir the liquid phase during the reaction, the stirring speed may be 600 rpm or more to ensure sufficient stirring. Alternatively, if a somewhat larger stirring blade or paddle is used, the stirring speed may be lower. The stirring speed may affect the control of particle shape.

The hydrothermal method can be performed by substantially the same method as the solvothermal method, with the exception that the raw material is the raw material gel as described above, and water such as pure water is used as the solvent in place of the organic solvent in the solvothermal method.

In the DGC method, the dried raw material gel is placed in a pressure-resistant vessel containing a liquid solvent so that it does not come into contact with the liquid. Then, in the pressure-resistant vessel, the solvent is evaporated and the raw material is caused to react in the gas phase containing the vapor of the solvent by pressurization (e.g., self-generated pressure or higher pressure as described below) and heating. As the solvent, water or a solution of sulfuric acid added to water can be used.

In the reaction step, the temperature in the pressure-resistant vessel is preferably 100°C to 300°C and maintained at that temperature for at least 30 minutes, or for at least 1 hour, and preferably for at least 5 hours. By increasing the temperature to some degree, crystals are formed in a relatively short period of time, and the product tends to be in a more desirable shape, such as non-needled particle shapes, e.g., angular, spherical, or even cube shapes. The temperature can be set in view of the material of the pressure-resistant vessel, which may be made of polytetrafluoroethylene or stainless steel, or the like. If a reasonable amount of liquid is present in the pressure-resistant vessel, the pressure in the pressure-resistant vessel will increase as the solvent is evaporated due to heating. The reaction step does not require intentional control of the pressure in the pressure-resistant vessel, and the reaction may be carried out under the action of pressure due to vapor pressure (self-generated pressure exhibited by the solvent) when it is heated to a predetermined temperature, or another gas such as nitrogen may be fed to increase the pressure. The pressure in the pressure-resistant vessel during the reaction can be higher than or equal to the self-generated pressure, 2 MPa as an example. If the pressure is too high, there are concerns about solvent decomposition, and the like. Depending on the specifications of the pressure-resistant vessel or other conditions, the pressure inside the pressure-resistant vessel may be 30 MPa or less, and even 20 MPa or less. The time to maintain the above temperature may be set as needed in view of economy and mass production, but it may be less than or equal to 24 hours. By thus conducting the reaction step, the raw material is dissolved in the liquid phase or the gas phase and the reaction product is obtained.

The precursor obtained in the reaction step often contains ZrW₂O₇(OH)₂(H₂O)₂, but in some cases, such a hydroxide is not produced in the DGC method. In such a case, the precursor may be in an amorphous state, not crystallized.

In the reaction step described above, the sulfate ions are present in the pressure-resistant vessel when the raw material or raw material gel is cause to react in the pressure-resistant vessel. This tends to suppress the formation of needle-shaped precursors and facilitate the obtaining of granular precursors.

For example, in the solvothermal step, when the raw material contains sulfate salts, sulfate ions derived from the sulfate salts, may become present in the pressure-resistant vessel in the reaction step.

In the hydrothermal method, sulfuric acid can be added in the form of a sulfuric acid solution or the like in the pressure-resistant vessel during the reaction step after the gel preparation step, if necessary, in order to have sulfate ions in the pressure-resistant vessel during the reaction step. In the DGC method, the raw material gel can be impregnated with sulfuric acid by immersing it in a sulfuric acid solution before the reaction step. In this case, the raw material gel will contain sulfuric acid, and when it is subjected to the reaction step, the sulfate ions are generated in the pressure-resistant vessel.

Especially in the DGC method, 8.2 to 49.2% by mass of sulfate ions are preferably present in the pressure-resistant vessel during the reaction. This makes it easier to obtain fine precursors. If an excessively low amount of sulfate ions is present, it may not be possible to achieve sufficient fineness. The amount of sulfate ions in the pressure-resistant vessel may preferably be less than or equal to 32.8% by mass and more than or equal to 16.4% by mass. In the solvothermal method, there is a concern that too much sulfate ions may reduce the yield, while too little sulfate ions may not sufficiently suppress the formation of needle-shaped precursor. In the hydrothermal method, as the amount of sulfate ions is higher, the product tends to become finer. The amount of sulfate ions in the pressure-resistant vessel may preferably be less than or equal to 32.8% by mass and more than or equal to 16.4% by mass.

After the reaction, the precursor obtained by solid-liquid separation by suction filtration or the like can be dried in a vacuum atmosphere, for example.

### (Heat Treatment Step)

The precursor produced in the reaction step is heated in the heat treatment step to form a product such as an oxide containing ZrW₂O₈.

The conditions of the heat treatment step may be changed as needed, for example, the precursor may be heated in air or in an inert atmosphere such as argon at 600°C to 700°C for 0.5 to 3 hours. If the temperature is too low or the time is too short, crystallization may not occur. On the other hand, if the temperature is too high or the time is too short, there is a concern that ZrW₂O₈ once crystallized may be decomposed into ZrO₂ and WO₃.

The zirconium tungstate thus produced is often granular rather than needle-shaped due to the suppressed formation of needle-shaped precursor in the reaction step. When such granular zirconium tungstate is mixed as a filler with a resin, an increase in viscosity is suppressed and required fluidity (thixotropy) can be exerted.

The presence of ZrW₂O₈ in the above product obtained in the heat treatment step and ZrW₂O₇(OH)₂(H₂O)₂ in the above precursor obtained in the reaction step can be confirmed by analysis using an X-ray diffraction method. In the X-ray diffraction method, for example, SmartLab (product name) from Rigaku Corporation can be used as an X-ray diffraction device, and analysis is carried out under conditions of measurement using an X-ray tube (Lab device), 40 kV/30 mA, using a Cu source (Kα), and measurement using the focusing method as θ-2θ measurement. In the examples described below, such X-ray diffraction device and analytical conditions were employed.

### [Examples]

The method for producing zirconium tungstate described above has been tested and is described below. However, descriptions herein are merely for illustration, and are not intended to be limited thereto.

### (Example 1)

400 mg of (NH₄)₁₀W₁₂O₄₁•5H₂O as a tungsten compound and 273 mg of Zr(SO₄)₂•4H₂O as a zirconium compound were placed in an autoclave together with 1,4-butanediol as an organic solvent, and synthesis was carried out by the solvothermal method. Here, the autoclave was heated on a hot plate and the heating time was 6 hours. At this time, the actually measured temperature of the plate of the hot plate was 156°C. The relationship between the temperature and the pressure was examined using another autoclave with a pressure gauge, which showed that the pressure in the autoclave was 2 MPa at a temperature of 200°C. Therefore, it is assumed that the pressure in the autoclave was 2 MPa or lower during that reaction. During the reaction, stirring was carried out using a cylinder-type rotor (Sm-Co) at 600 rpm. After heating and pressurization, the product was quenched in an ice bath.

The resulting precursor was gray-white to light blue solid powder, and X-ray diffraction analysis confirmed the peak of ZrW₂O₇(OH)₂(H₂O)₂.

The above precursor was then subjected to a heat treatment at 700°C for 3 hours to obtain a product. The product was white solid powder, with the X-ray diffraction profile (SAMPLE) shown in FIG. 3, and zirconium tungstate (ZrW₂O₈) was produced. FIG. 4 illustrates a SEM image of the product after the heat treatment. It is found from FIG. 4 that the product has suppressed needle-shaped products and contains a large number of granular products.

### (Example 2)

The synthesis and heat treatment of the precursor were performed by the same method as that of Example 1 to obtain a product, with the exception that the heating time of the solvothermal method was changed to 8 hours and the actually measured temperature of the plate was 161°C. The actually measured temperature of the plate was substantially the same as that of the plate in Example 1, and it is assumed that the temperature in the pressure-resistant vessel during the reaction was also substantially the same as that of Example 1. The X-ray diffraction profile and SEM image of the resulting product are shown in FIGS. 5 and 6, respectively.

It is found from FIG. 5 that the product also contained zirconium tungstate (ZrW₂O₈). It is also found from FIG. 6 that the product had a larger amount of granular product than needle-shaped product.

### (Example 3)

11,742.7 mg of Na₂WO₄•2H₂O as a tungsten compound was added to 50 mL of distilled water to prepare an aqueous tungstate solution. Also, 6325.9 mg of Zr(SO₄)₂•4H₂O as a zirconium compound was added to 50 mL of distilled water to prepare an aqueous zirconium salt solution. Those aqueous solutions were mixed together, stirred at 600 rpm in an ion exchange solution at a temperature of 20°C, and subjected to suction filtration and washed with 100 mL of distilled water to obtain a raw material gel.

The above raw material gel was impregnated with 16.4% by mass of sulfuric acid, and the raw material gel was introduced into an autoclave together with 16.4% by mass of sulfuric acid, and synthesis was carried out by the DGC method. Here, distilled water was used as the solvent, the heating time was 12 hours, and the set temperature of the autoclave was 150°C. It is believed that the temperature in the autoclave during the reaction was 150°C and the pressure was 0.5 MPa based on the vapor pressure curve. After heating and pressurization, the product was quenched in an ice bath.

The precursor thus obtained was a gray solid, and analysis by X-ray diffraction confirmed a peak corresponding to ZrW₂O₇(OH)₂(H₂O)₂.

The above precursor was then subjected to a heat treatment at 600°C for 3 hours to obtain a product. The product was a white solid, and had the X-ray diffraction profile shown in FIG. 7, indicating that zirconium tungstate (ZrW₂O₈) was produced. FIG. 8 illustrates a SEM image of the product after the heat treatment. It is found from FIG. 8 that the product has suppressed needle-shaped products and contains a large number of granular products.

### (Example 4)

A raw gel was obtained by the same method as that of Example 3. Next, without impregnating the raw material gel with sulfuric acid, the raw material gel was introduced into an autoclave together with a sulfuric acid solution, and synthesis was performed by the hydrothermal method. Here, the heating time was 12 hours and the set temperature of the autoclave was 150°C. It is believed that the temperature in the autoclave during the reaction was 150°C and the pressure was 0.5 MPa based on the vapor pressure curve. During the reaction, stirring was carried out using a cylinder-type rotor (Sm-Co) at 600 rpm. After heating and pressurization, the product was quenched in an ice bath. Such synthesis was performed for molar concentrations of 1.0 M, 0.5 M, and 0.25 M of the above aqueous sulfuric acid solution, and precursors were prepared under the respective conditions.

All the precursors thus obtained were gray solids, and analysis by X-ray diffraction showed the X-ray diffraction profile illustrated in FIG. 9, indicating the peak of ZrW₂O₇(OH)₂(H₂O)₂.

SEM images of the above precursors are shown in FIGS. 10 to 12. It is found from FIGS. 10 to 12 that the products have suppressed needle-shaped products and contain a large number of granular products. Therefore, it is considered that by subjecting the above precursor to the heat treatment, granular zirconium tungstate (ZrW₂O₈) can be obtained.

In view of the foregoing, it was found that the above method for producing zirconium tungstate suppresses needle-shaped products and produces granular products.

## Claims

1. A method for producing zirconium tungstate, the method comprising:
a reaction step of causing a raw material comprising zirconium and tungsten to react by heating it under an action of pressure in a pressure-resistant vessel to obtain a precursor; and
a heat treatment step of heating the precursor to obtain a product comprising ZrW₂O₈,
wherein, in the reaction step, the raw material is caused to react in a presence of sulfate ions in the pressure-resistant vessel.

2. The method for producing zirconium tungstate according claim 1, wherein, in the reaction step, an organic solvent is used as a solvent, and the raw material is caused to react in a liquid phase of the organic solvent,
wherein the raw material comprises a zirconium compound and a tungsten compound, and
wherein each of the zirconium compound and the tungsten compound is introduced into the pressure-resistant vessel together with the solvent, and the reaction step is carried out.

3. The method for producing zirconium tungstate according to claim 2, wherein the organic solvent comprises a diol.

4. The method for producing zirconium tungstate according to claim 2, wherein the organic solvent comprises 1,4-butanediol.

5. The method for producing zirconium tungstate according to claim 2, wherein the zirconium compound and/or the tungsten compound comprise a sulfate salt.

6. The method for producing zirconium tungstate according to claim 1, wherein, in the reaction step, the raw material is caused to react while stirring in a liquid phase of water as a solvent or in a gas phase comprising solvent vapor,
wherein, prior to the reaction step, the method further comprises a gel preparation step of mixing the zirconium compound with the tungsten compound in a liquid and then drying them to prepare a raw material gel in which the zirconium compound and the tungsten compound are dispersed, and
wherein the raw material gel is used as the raw material in the reaction step.

7. The method for producing zirconium tungstate according to claim 6, wherein sulfuric acid is introduced into the pressure-resistant vessel together with the raw material gel and the solvent in the reaction step.

8. The method for producing zirconium tungstate according to claim 6, wherein the zirconium compound and/or the tungsten compound used in the gel preparation step comprise a sulfate salt.

9. The method for producing zirconium tungstate according to claim 6, wherein, in the reaction step, the raw material is caused to react in the gas phase comprising solvent vapor, and
wherein the raw material gel is impregnated with sulfuric acid and the raw material gel is used in the reaction step.

10. The method for producing zirconium tungstate according to any one of claims 1 to 9, wherein the precursor comprises ZrW₂O₇(OH)₂(H₂O)₂.
